# EUROPEAN PATENT APPLICATION

(11) **EP 1 111 757 A2**
(43) Date of publication of application: **27.06.2001**
(21) Application number: 00310390.0
(22) Date of filing: 23.11.2000
(51) Int. Cl.: H02K 3/52

(54) **Stator structure of electric motor and connection board for stator winding**

(30) Priority: 02.12.1999 JP 34330599
(71) Applicant: Fanuc Ltd, Minamitsuru-gun, Yamanashi 401-0597 (JP)
(72) Inventor: Endo, Yuichi, Fujiyoshida, Yamanashi 403-0005 (JP); Tamaki, Takeshi, FANUC Dai3virakaramatsu, Minamitsuru-gun, Yamanashi 401-0511 (JP)
(74) Representative: Billington, Lawrence Emlyn

(57) **Abstract**

A connection board (1) is composed of five stacked connection board elements; three for three phases, and two for Y-connection and Δ-connection. Each connection board element is provided with a conductor, and connecting portions which are connected to terminals for connecting the conductor to an external power source. Terminals (3) of shunt windings (2) of each phase, are selectively connected to the conductor. Holes are drilled in the connection board (1) by selecting the wiring pattern of windings, and whether the shunt windings (2) of each phase are connected in series or in parallel, or whether they are connected in Y-connected or in A-connection, to obtain a desired wiring pattern of stator windings. The connection board (1) is then fixed to the stator windings (2). Various wiring patterns can be obtained simply by selecting locations for drilling holes, thereby facilitating the inventory control of connection boards.

## Description

The present invention relates to a connection board used for connecting stator windings of an electric motor, and to a stator structure in which the wiring of stator windings is executed using such a connection board.

Even same-size electric motors can be varied in their characteristics by (a) varying specification of windings, such as wire diameter, the number of turns, and the number of wires wound collectively in parallel (the number of parallel wires) of stator windings; or by (b) varying wiring pattern of wirings by changing a connection pattern of each wiring without varying the specification of windings. In the method (b), the wiring pattern can be varied specifically by (b1) connecting shunt windings that compose windings of each phase in series or in parallel (by changing a combination of connection of shunt windings); or by (b2) connecting windings in Y-connection or Δ-connection (by changing the wiring pattern of windings).

When the characteristics of electric motors of the same size are varied by changing the specifications of windings, arrangements of a winding process must be changed because the wire diameter of stator windings, the number of turns, and the number of parallel wires are changed. This method is also disadvantageous in that various types of windings must be prepared.

On the other hand, in order to vary the characteristics of electric motors by changing the wiring pattern of windings, the wiring pattern is changed by changing a connection board on which the windings are connected. Therefore, various connection boards on which the windings are connected to obtain each wiring pattern must be prepared. In this case, connection boards must be provided also for electric motors produced in small quantities, thereby increasing the production costs of connection boards. Furthermore, in order to obtain various wiring patterns of windings, connection boards must be provided for each wiring pattern, whereby an inventory control of connection boards becomes complicated.

According to a first aspect of the present invention there is provided a stator structure of an electric motor that uses a connection board for wiring of stator windings, comprising: a connection board having a connection pattern that can acquire various wiring patterns by connecting terminals of windings constituting said stator windings to each other, wherein a part of the connection pattern on said connection board is disconnected or added so as to form a wiring pattern of said stator windings and to connect the windings to each other.

According to a second aspect of the present invention there is provided a connection board creating stator wiring patterns together with stator windings of each phase of an electric motor, wherein said connection board is constituted by a stacked plurality of connection board elements, each of said connection board elements is provided with a conductor that provides various stator winding patterns when combined with stator windings, and a desired stator winding pattern has been formed in said connection board elements by making holes at selected locations of said connection board, to disconnect a corresponding location of a conductor of each of said connection board elements.

Embodiments of the present invention can provide a connection board having connection patterns that can provide various wiring patterns by connecting terminals of the windings constituting the stator windings. The wiring patterns of stator windings may be formed by selectively disconnecting or adding a part of the connection pattern (basic pattern) on a connection board.

The connection board may be formed by stacking a plurality of connection board elements. By making holes, a conductor of a connection pattern provided on each connection board element may be cut, thereby obtaining the wiring pattern of stator wirings. Furthermore, after the wiring pattern is thus obtained, a short-circuiting material may be inserted in some of a plurality of holes provided in the connection board elements for short-circuiting these holes.

A preferred embodiment of the present invention may provide a connection board for stator windings that can change the characteristics of an electric motor by varying specifications of stator windings and the wiring pattern of stator windings. A further preferred embodiment may provide a stator structure for wiring stator windings using such a connection board.

The foregoing and other features of embodiments of the present invention will become apparent from the following description of preferred embodiments of the invention with reference to the accompanying drawings, in which:
Fig. 1 is a schematic diagram showing a stator structure of an 8-pole 3-phase electric motor according to an embodiment of the present invention to which a connection board for stator windings is connected;
Fig. 2 is a diagram showing a basic pattern of the stator windings for one phase when the stator windings are connected to the connection board 1 of Fig. 1;
Figs. 3A-3C are diagrams each showing a wiring pattern for one phase formed from the basic pattern of the stator windings;
Fig. 4 is a diagram showing Y-connected wiring patterns of FIG 3A;
Fig. 5 is a diagram showing Δ-connected wiring patterns of FIG 3A;
FIGS 6A-6C are diagrams each showing the basic pattern of a connection board element for U, V, and W phases composing the connection board of Fig. 1;
Figs. 7A and 7B are diagrams each showing a basic pattern of a connection board element for Y-connection and Δ-connection;
Fig. 8 is a diagram illustrating the locations of holes drilled for obtaining various wiring patterns of stator windings;
Figs. 9A-9C are diagrams each showing a connection pattern of a connection board element for U, V, and W phases, when the shunt windings of each phase are connected in series;
Figs. 10A and 10B are diagrams each showing a connection pattern of a connection board element for Y-connection and Δ-connection, when the shunt windings of each phase are connected in series to form Y-connection;
Figs. 10C and 10D are diagrams each showing a connection pattern of a connection board element for Y-connection and Δ-connection, when the shunt windings of each phase are connected in series to form Δ-connection;
Figs. 11A-11C are diagrams each showing a connection pattern of a connection board element for U, V, and W phases, when forming a dual parallel winding pattern;
Figs. 12A and 12B are diagrams each showing a connection pattern of a connection board element for Y-connection and Δ-connection, when forming a Y-connection with a dual parallel winding pattern;
Figs. 12C and 12D are diagrams each showing a connection pattern of a connection board element for Y-connection and Δ-connection, when forming a Δ-connection with a dual parallel winding pattern;
Figs. 13A-13C are diagrams each showing a connection pattern of a connection board element for U, V, and W phases, when forming a quadruple parallel winding pattern;
Figs. 14A and 14B are diagrams each showing a connection pattern of a connection board element for Y-connection and Δ-connection, when forming a Y-connection with a quadruple parallel winding pattern;
Figs. 14C and 14D are diagrams each showing a connection pattern of a connection board element for Y-connection and Δ-connection, when forming a Δ-connection with a quadruple parallel winding pattern; and
Fig. 15 is a table showing the numbers of holes to be bored in the connection board for obtaining various wiring patterns

### DETAILED DESCRIPTION OF THE PREFERRED EMBODIMENTS

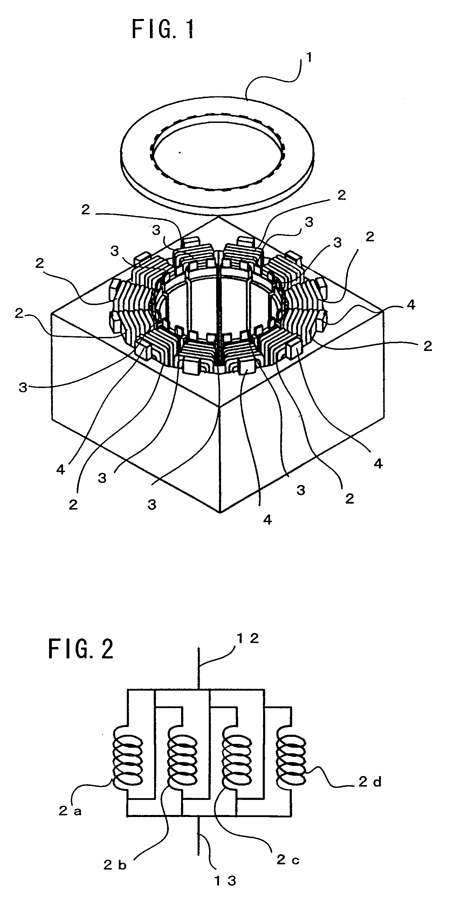

Fig. 1 shows a stator structure of an 8-pole 3-phase (U, V, W) electric motor to which a connection board 1 is connected.

The stator windings of each phase of the electric motor are composed of four shunt windings 2. At both ends of each shunt winding 2, terminals 3 for connecting with the connection board are provided. Therefore, the total number of terminals is 3 (phases) x 4 (number of shunt windings 2 for each phase) x 2 (one end and the other end) = 24. The numeral 4 represents cross-arm braces for windings.

Fig. 2 shows a basic pattern of the stator windings for one phase when the stator windings are connected to the connection board 1. In Fig. 2, four shunt windings 2 that constitute the stator windings for one phase are represented by 2a, 2b, 2c, and 2d.

The both ends of shunt windings 2a to 2d are connected to an end 12 and the other end 13 of the stator windings for one phase composed of shunt windings, respectively. Furthermore, the end of the shunt windings 2a on the end 13 side is connected to the end 12, and to the end of the shunt windings 2b on the end 12 side. The end of the shunt windings 2b on the end 13 side is connected to the end 12, and to the end of the shunt windings 2c on the end 12 side. The end of the shunt windings 2c on the end 13 side is connected to the end 12, and to the end of the shunt windings 2d on the end 12 side.

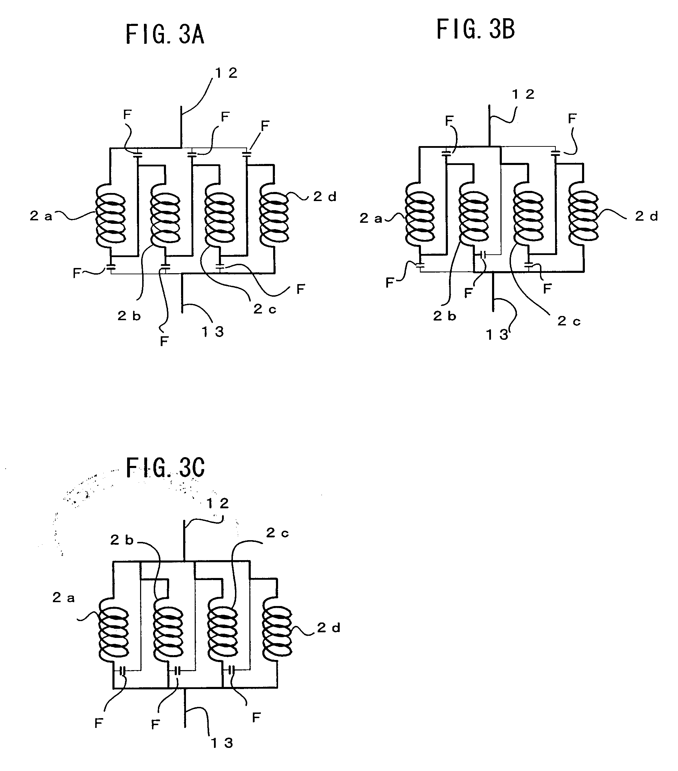

The stator windings of Fig. 2 are of a basic pattern, and are not used as they are. When they are actually used, a part of the connection conductor of the connection board 1 is disconnected to obtain various wiring patterns. Disconnecting a part of the connection conductor means to disconnect a part of the basic pattern of Fig. 2, as shown by the symbol F in Figs. 3A-3C.

When the portions of the basic pattern of Fig. 2, shown by the symbol F in Fig. 3A, are disconnected, the four shunt windings 2a-2d are connected in series between one end 12 and the other end 13 of stator windings. The pattern shown in Fig. 3A is hereafter called "serial connection".

In Fig. 3A to Fig. 5, the symbol F indicates the disconnecting points of the conductor that connects each shunt winding. These disconnecting points are obtained by forming holes on the connection board 1, as described below. In Figs. 3A to 3C, thick lines show the path of electric current.

When the portions of the basic pattern of Fig. 2, shown by the symbol F in Fig. 3B, are disconnected, the shunt windings 2a and 2b are connected in series, and the shunt windings 2c and 2d are connected in series. These two serial circuits (2a-2b, 2c-2d) are connected in parallel. The pattern shown in Fig. 3B is hereafter called "dual parallel connection".

When the portions of the basic pattern of Fig. 2, shown by the symbol F in Fig. 3C, are disconnected, all the shunt windings 2a through 2d are connected in parallel. The pattern shown in Fig. 3C is hereafter called "quadruple parallel connection".

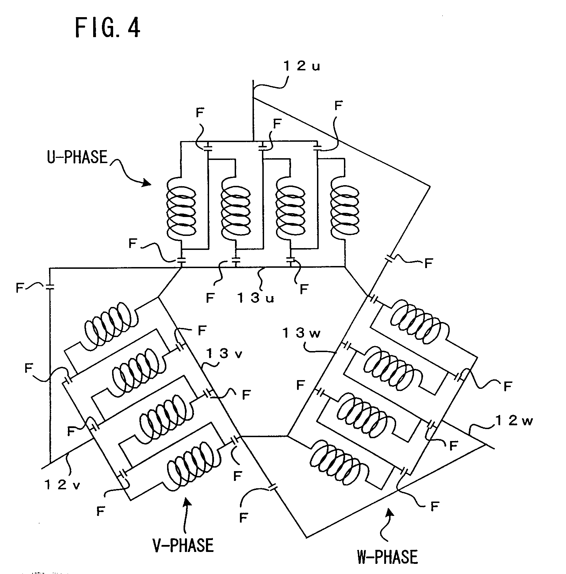

Fig. 4 shows a state where the wiring pattern (serial connection) is prepared for each of U, V, and W phases to form Y-connection. In Fig. 4, the ends 13 of stator windings when the winding pattern shown in Fig. 3A is used in stator windings of U, V, and W phases are identified by 13u, 13v, and 13w, respectively.

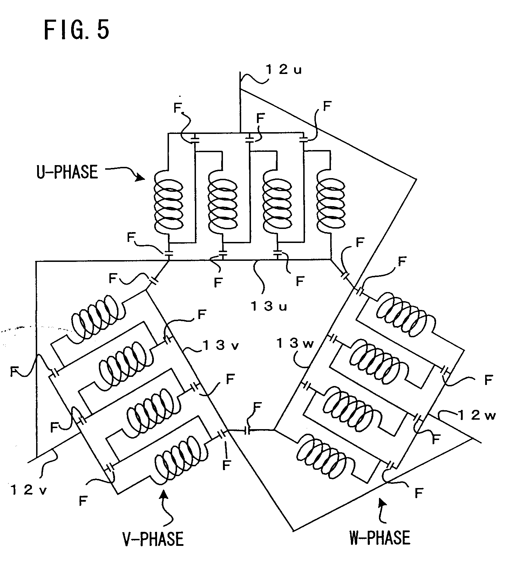

Fig. 5 shows a state where the wiring pattern shown in FIG. 3A is prepared for each of U, V, and W phases to form Δ-connection. In Fig. 5, the both ends 12 and 13 of stator windings when the winding pattern shown in Fig. 3A is used in stator windings of U, V, and W phases are identified by 12u, 13u; 12v, 13v; and 12w, 13w, respectively.

Similarly, wiring patterns shown in Fig. 3B or Fig. 3C (dual parallel connection or quadruple parallel connection) can be prepared for each of U, V, and W phases to form Y-connection or Δ-connection.

As described above, the locations of the basic pattern to be disconnected (the selection of disconnected locations F) determine which of serial connection of Fig. 3A, Dual parallel connection of Fig. 3B, and quadruple parallel connection of Fig. 3C is made from the basic pattern of Fig. 2. That is, the locations of a connection board 1 at which holes are drilled determine this, as described below. Furthermore, the locations of a connection board 1 at which holes are drilled also determine which of Y-connection and Δ-connection is made by combining three wiring patterns (Figs. 3A-3C) for one phase.

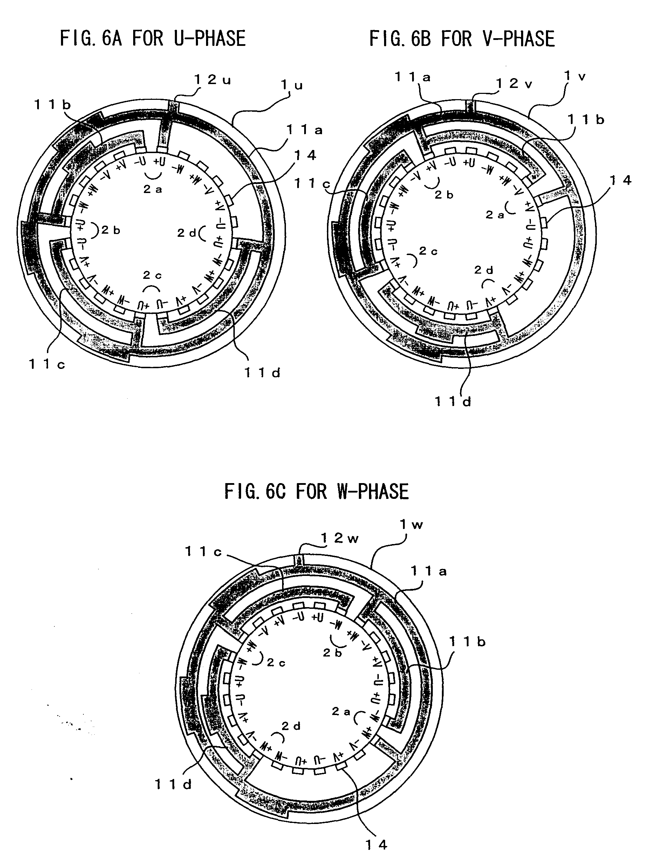

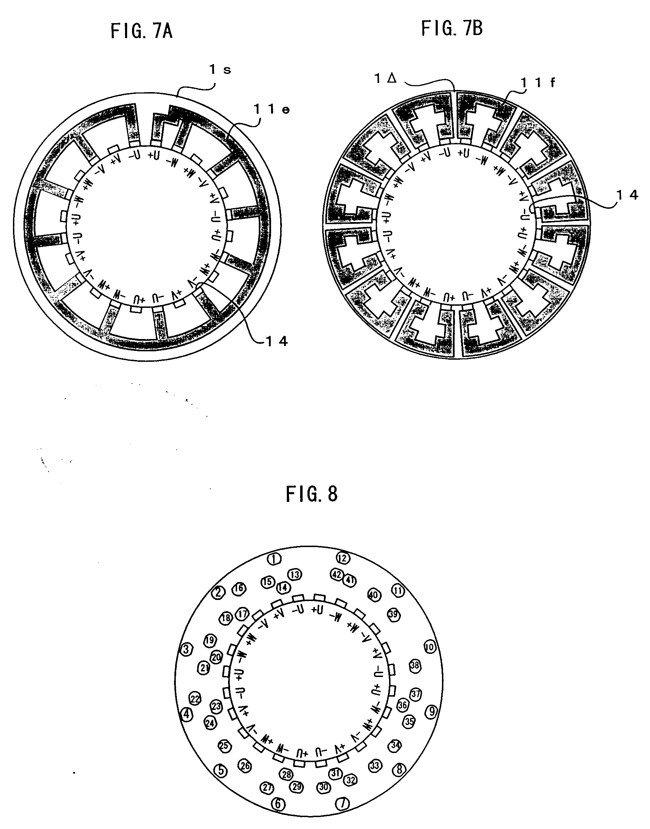

The connection board 1 is formed by stacking five connection board elements. The five connection board elements are: a connection board element 1u for U-phase shown in Fig. 6A, a connection board element 1v for V-phase shown in Fig. 6B, a connection board element 1w for W-phase shown in Fig. 6C, a connection board element 1s for Y-connection shown in Fig. 7A, and a connection board element 1Δ for Δ-connection shown in Fig. 7B. The surfaces of these connection board elements are coated with an insulating material. The connection board elements shown in Figs. 6A-6C, Fig. 7A, and Fig. 7B are those which have not been drilled. When these connection board elements are actually used, holes are selectively formed at specified locations.

As described above, one connection board 1 is formed by stacking the five connection board elements, 1u, 1v, 1w, 1s, and 1Δ aligning the phase.

These connection board elements have conductor portions. These conductor portions will be described below.

In Figs. 6A-6C, Fig. 7A, and Fig. 7B, hatched areas 11a, 11b, 11c, 11d, 11e, and 11f show the conductor portions.

In each of connection board element, 1u, 1v, and 1w for U, V, and W phases of FIGS. 6A-6C, respectively, the conductor portion includes a circular conductor portion 11a, and three arc-shaped conductor portions 11b, 11c, and 11d positioned on a same circumference.

The connection board elements, 1u, 1v, and 1w are substantially annular. On the inner circumferential surface, 24 connecting portions 14 to fit end terminals 3 of each shunt winding of each phase (four shunt windings for each of U, V, and W phases; two terminals for one shunt winding) are provided equidistantly in the circumferential direction.

In Fig. 6A and the followings, symbols +u and -u, +v and -v, and +w and -w shown in the connecting portions 14 are the connecting portions to be connected to the terminals 3 of the shunt windings of U, V, and W phases, respectively. The + symbols and the - symbols indicate that the terminal 12 and the terminal 13 side of the basic pattern of Fig. 2 are connected, respectively.

Wire ends 12u, 12v, and 12w of connection board elements 1u, 1v, and 1w for U, V, and W phases, respectively to be connected to external power source (not shown) are connected to the outer circular conductor 11a, as shown in Figs. 6A-6C.

Furthermore, in the connection board element 1u, the circular conductor 11a is connected to the connecting portion 14 to be connected to the positive-terminal 3 (+U) of the U-phase, as shown in Fig. 6A. The arc-shaped conductors 11b, 11c, and 11d are connected to the connecting portions 14 to be connected to positive-terminal 3 (+U) and negative-terminal 3 (-U) of the U-phase shunt winding, respectively.

Similarly, in the connection board element 1v, the circular conductor 11a is connected to the connecting portion 14 to be connected to the positive-terminal 3 (+V) of the V-phase, as shown in Fig. 6B. The arc-shaped conductors 11b, 11c, and 11d are connected to the connecting portions 14 to be connected to positive-terminal 3 (+V) and negative-terminal 3 (-V) of the V-phase shunt winding, respectively.

Furthermore, in the connection board element 1w, the circular conductor 11a is connected to the connecting portion 14 to be connected to the positive-terminal 3 (+W) of the W-phase, as shown in Fig. 6C. The arc-shaped conductors 11b, 11c, and 11d are connected to the connecting portions 14 to be connected to positive-terminal 3 (+W) and negative-terminal 3 (-W) of the W-phase shunt winding, respectively.

Here, the structure of the connection board element 1u for the U-phase shown in Fig. 6A will be described in detail below.

The terminal 3 in the positive-side (terminal 12-side) of the shunt winding 2a shown in Fig. 2 is connected to the connecting portion 14 (+U), which is connected to the circular conductor 11a, and is not connected to any of arc-shaped conductors 11b, 11c, and 11d. The connecting portion 14 (-U), to which the negative-side terminal 3 (terminal 13-side) of the shunt winding 2a is connected, is connected to the connecting portion 14 (+U), to which the positive-side terminal 3 of the shunt winding 2b shown in Fig. 2 is connected via the arc-shaped conductor 11b. Further, the connecting portion 14 (-U), to which the negative side terminal of the shunt winding 2b is connected, is connected to the connecting portion 14 (+U), to which the positive-side terminal 3 of the shunt winding 2c shown in Fig. 2 is connected via the arc-shaped conductor 11c. The connecting portion 14 (-U), to which the negative side terminal of the shunt winding 2c is connected, is connected to the connecting portion 14 (+U), to which the positiveside terminal 3 of the shunt winding 2d shown in Fig. 2 is connected via the arc-shaped conductor 11d. On the other hand, the connecting portion 14 (-U), to which the negative side terminal of the shunt winding 2d is connected, is connected to none of the conductors of the connection board element 1u.

The structures of the connection board element 1v for the V-phase shown in Fig. 6B and the connection board element 1w for the W-phase shown in Fig. 6C are similar to the structure of the connection board element 1u for the U-phase shown in Fig. 6A. That is, the connecting portion 14 to be connected to conductors 11a-11d are the connecting portions 14 (+V) and 14 (-V) to which the positive-side and negative-side terminals 3 of the winding for the V-phase, respectively, in the connection board element 1v for the V-phase shown in Fig. 6B; and are the connecting portions 14 (+W) and 14 (-W) to which the positive-side and negative-side terminals 3 of the winding for the W-phase, respectively, in the connection board element 1w for the W-phase shown in Fig. 6C.

In the connection board element 1u for the U-phase (Fig. 6A), the connection board element 1v for the V-phase (Fig. 6B), and the connection board element 1w for the W-phase (Fig. 6C), the ends for external connection 12u, 12v, and 12w are connected to the circular conductor 11a. The connecting portion 14 connected to the circular conductor 11a via none of arc-shaped conductors 11b, 11c, and 11d becomes the connecting portions 14 (+U, +V, +W) to which one end of the shunt winding 2a shown in Fig. 2. On the other hand, the connecting portion to which the other end of the shunt winding 2d shown in Fig. 2 becomes the connecting portions 14 (-U, -V, -W) which are not connected to the conductors of any of the connection board elements 1u, 1v, and 1w.

Thus, the connection board element 1u for the U-phase (Fig. 6A), the connection board element 1v for the V-phase (Fig. 6B), and the connection board element 1w for the W-phase (Fig. 6C) form the connection pattern that can produce the connection of Fig. 2 with conductors 11a through 11d.

Certain parts of the conductors 11a through 11d of these connection board elements 1u, 1v, and 1w are widened. This is because of consideration that even though a part of conductors 11a through 11d of any connection board element constituting the connection board 1 is drilled to disconnect the conductors, corresponding part of conductors 11a through 11d of any other connection board elements is not disconnected.

Figs. 7A and 7B show the basic patterns of connection board elements for Y-connection and Δ-connection, respectively.

Since the connection board element shown in Fig. 7A is used for Y-connection, this is hereafter called the connection board element for Y-connection 1s. Since the connection board element shown in Fig. 7B is used for Δ-connection, this is hereafter called the connection board element for Δ-connection 1Δ.

In the connection board element for Y-connection 1s shown in Fig. 7A, the connecting portion 14, to which terminals 3 of -u, -v, and -w are connected, is connected to the conductor 11e. This conductor 11e is substantially circular although a part of the circumference is lacked. The radius of the circle is the same as the radius of the circle of conductor 11a on each of connection board elements 1u, 1v, and 1w, for the U-phase, the V-phase and the W-phase and is positioned on the same circumference as the circumference of the conductor 11a.

One end of the conductor 11e, in which a part of the circumference is disconnected, is connected to the connecting portion 14 (+U) to be connected to the positive-side terminal 3 of the shunt winding 2a for the U-phase shown in Fig. 2, and the other end is connected to the connecting portion 14 (-U) adjacent to the connecting portion 14 (+U).

Although the conductor lie is not perfectly circular as described above, this is hereafter called the circular conductor.

Next, in the connection board element for Δ-connection 1Δ shown in Fig. 7B, the connecting portion 14 (-U) and the connecting portion 14 (+V) adjacent to each other to which the terminals 3 of-u and +v are connected, the connecting portion 14 (-V) and the connecting portion 14 (+W) adjacent to each other to which the terminals 3 of -v and +w are connected, and the connecting portion 14 (-W) and the connecting portion 14 (+U) adjacent to each other to which the terminals 3 of -w and +u are connected, are connected to each other through the conductors 11f.

By aligning the phase of the above-described five connection board elements 1u, 1v, 1w, 1s, and 1Δ shown in Fig. 6A through Fig. 7B, insulating between each connection board element with an insulator, and stacking them, a connection board 1 is constituted.

Holes F are drilled on the adequate places of the connection board 1, to obtain the wiring patterns of stator windings shown in Figs. 3 and 4 selectively.

In this embodiment, six types of wiring patterns, [serial connection - Y-connection], [serial connection - Δ-connection], [dual parallel connection - Y-connection], [dual parallel connection - Δ-connection], [quadruple parallel connection - Y-connection], and [quadruple parallel connection - Δ-connection] can be obtained selectively by the selection of locations of holes drilled on the connection board 1.

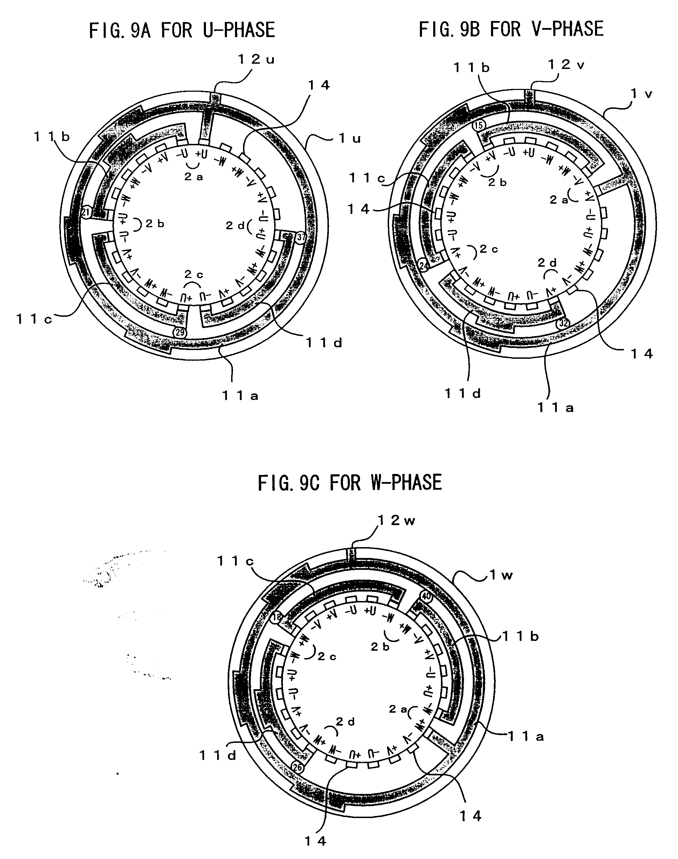

Fig. 8 is a diagram illustrating the locations of holes F1 through F 42 drilled when the selected wiring patterns are formed. In Fig. 8, and in Fig. 9A through Fig. 14D described later, the symbol F is omitted, and only numerals are used to indicate these holes. For example, the hole "F1" is indicated as "1".

In Fig. 8, holes to be drilled are positioned on four circumferences of different radii. In the following description, these four circumferences are called first, second, third, and fourth circumferences in the order from the largest radius.

Holes F1 through F12 are positioned on the first circumference. These holes F1 through F12 are holes to disconnect the conductor 11f that connects the connecting portions 14 adjacent to each other of the connection board element for Δ-connection 1Δ shown in Fig. 7B. Consideration is made so that drilling of these holes F1 through F12 does not disconnect the conductors of other connection board elements 1u, 1v, 1w, and 1s.

Holes F16, F22, and F27 are positioned on the second circumference. These holes F16, F22, and F27 are holes drilled for other than [dual parallel connection - Y-connection], and are holes to disconnect the conductor lie on the connection board element for Y-connection 1s. These holes F16, F22, and F27 are drilled on the locations above the circular conductors 11a of the connection board elements 1u, 1v, and 1w for U-, V-, and W-phases, respectively. However, in the connection board elements 1u, 1v, and 1w for U-, V-, and W-phases, consideration is made so that the conductors 11a are widely formed on locations where these holes F16, F22, and F27 are drilled, and these holes F16, F22, and F27 do not disconnect the conductors 11a of the connection board elements 1u, 1v, and 1w.

Holes F13, F15, F18, F19, F21, F24-F26, F29, F30, F32-F35 and F37-F42 are positioned on the third circumference. These holes are drilled between the circular conductor 11a and arc-shaped conductors 11b, 11c, and 11d of the connection board elements 1u, 1v, and 1w for U-, V-, and W-phases, respectively, and are holes to disconnect conductors that connect each connecting portion 14 to circular conductor 11a, and the conductor 11e on the connection board elements for Y-connection 1s to each connecting portion 14.

Holes F14, F17, F20, F23, F28, F31, and F36 are positioned on the fourth circumference. These holes are drilled on the same radius as the radii of arc-shaped conductors 11b, 11c, and 11d that connect shunt windings, and are holes to disconnect these conductors 11b, 11c, and 11d selectively.

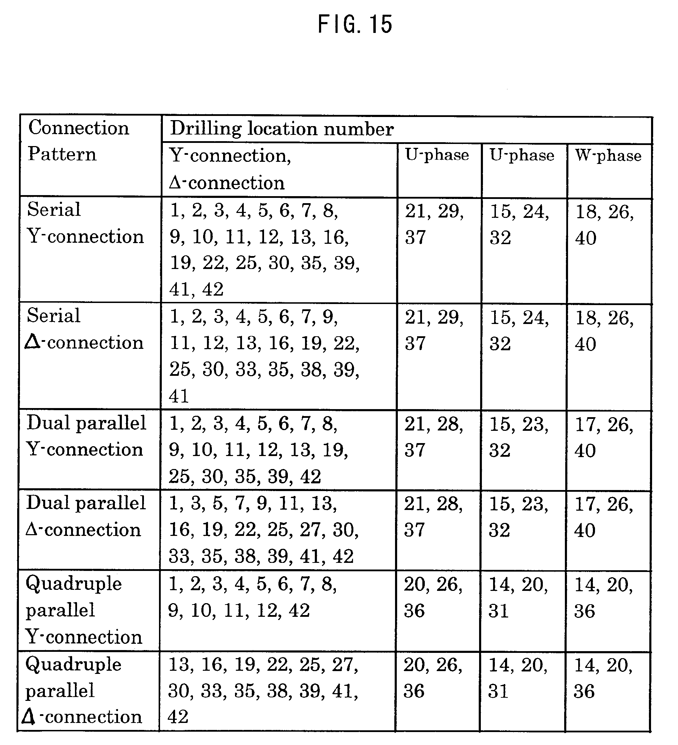

The locations for drilling holes F to obtain each wiring pattern are shown in Fig. 15.

Next, drilling of the connection board 1 for obtaining each wiring pattern will be described below.

### (1) Serial connection - Y-connection

On a connection board 1, which is formed by stacking five connection board elements 1u, 1v, 1w, 1s, and 1Δ, holes F1-F13, F15, F16, F18, F19, F21, F22, F24-F26, F29, F30, F32, F35, F37 and F39-F42 are drilled.

Fig. 9A through Fig. 9C are diagrams showing the state of the connection board elements 1u, 1v, and 1w for U-, V-, and W-phases, respectively, when serial connection is made. Although a plurality of holes F are selectively drilled on the connection board 1 as described above, Fig. 9A through Fig. 9C show only holes F related to the formation of the connection board elements 1u, 1v, and 1w, respectively.

As shown in Fig. 9A, since holes F21, F29, and F37 are drilled on the connection board element 1u for the U-phase, only the connecting portion 14, which is connected to the positive-side terminal 3 (+U) of the shunt winding 2a of the U-phase, is connected to the circular conductor 11a, which is connected to the terminal 12u to be connected to power source. Holes F21, F29, and F37 disconnect the connecting portions 14, which are connected to the positive-side terminals 3 (+U) of other shunt windings 2b, 2c, and 2d for the U-phase, from the circular conductor 11a, thus disconnect from the external terminal 12u.

The connecting portion 14, which is connected to the negative-side terminal 3 (-U) of the shunt winding 2a of the U-phase, is connected to the connecting portion 14 of the positive-side terminal 3 (+U) of the shunt winding 2b of the U-phase via the circular conductor 11b. The connecting portion 14, which is connected to the negative-side terminal 3 (-U) of the shunt winding 2b of the U-phase, is connected to the connecting portion 14 of the positive-side terminal 3 (+U) of the shunt winding 2c of the U-phase via the circular conductor 11c. The connecting portion 14, which is connected to the negative-side terminal 3 (-U) of the shunt winding 2c of the U-phase, is connected to the connecting portion 14 of the positive-side terminal 3 (+U) of the shunt winding 2d of the U-phase via the circular conductor 11d. That is, shunt windings 2a, 2b, 2c, and 2d of the U-phase are connected in series.

Similarly, as shown in Fig. 9B, since holes F15, F24, and F32 are drilled on the connection board element 1v for the V-phase, only the connecting portion 14, which is connected to the positive-side terminal 3 (+V) of the shunt winding 2a of the V-phase, is connected to the circular conductor 11a. Shunt windings 2a, 2b, 2c, and 2d of the V-phase are also connected in series via circular conductors 11b, 11c, and 11d.

Furthermore, as shown in Fig. 9C, since holes F18, F26, and F40 are drilled on the connection board element 1w for the W-phase, only the connecting portion 14, which is connected to the positive-side terminal 3 (+U) of the shunt winding 2a of the W-phase, is connected to the circular conductor 11a. Shunt windings 2a, 2b, 2c, and 2d of the W-phase are also connected in series via circular conductors 11b, 11c, and 11d.

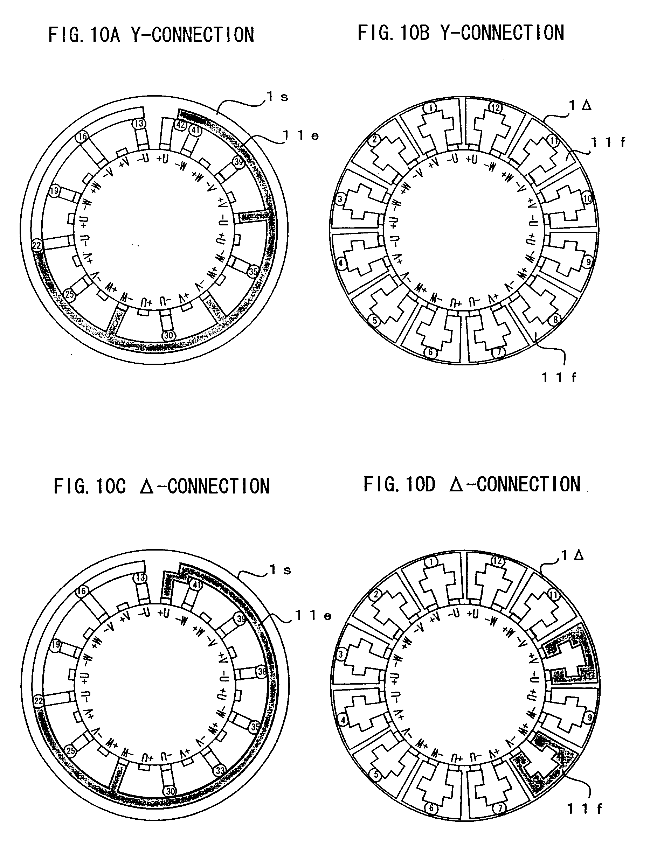

When Y-connection is to be made, for the connection board element 1s for Y-connection, only the connecting portions 14 of the negative-side terminals 3 (-U, -V, -W) of the shunt windings 2d for U-, V-, and W-phases, respectively, are connected to the circular conductor 11e of the connection board element 1s for Y-connection, because holes F13, F16, F19, F22, F25, F30, F35, F39, F41, and F42 are drilled as shown in Fig. 10A. For the connection board element 1Δ for Δ-connection, since holes F1 through F12 are drilled, the conductors 11f that connect each connecting portion 14 are disconnected to break connection between the connecting portions.

As a result, the terminals 12u, 12v, and 12w for U-, V-, and W-phases, respectively, to be connected to power source are connected to the positive-side terminals 3 (+U, +V, +W) of shunt windings 2a of each phase. Each of shunt windings 2a, 2b, 2c, and 2d are connected in series via circular conductors 11b, 11c, and 11d. The negative-side terminal 3 (-U, -V, -W) of the last shunt windings 2d is connected to the circular conductor 11e of the connection board element 1s for Y-connection shown in FIG. 10A. Thus, the wiring pattern of [serial connection - Y-connection] shown in Fig.4 is obtained.

Although a problem may be arisen if holes necessary for obtaining the wiring pattern of [serial connection - Y-connection] disconnect conductors 11a through 11e of other connection board elements to make them not conduct electric current at locations where electric current must be conducted, the present invention overcomes this problem, and is constituted so as not to disconnect conductors that should not be disconnected, and to allow then to conduct electric current.

Although holes F21, F29, and F37 are drilled on the connection board element 1u for the U-phase to obtain the wiring pattern of [serial connection - Y-connection], and the connection between the circular conductor 11a and the connecting portions 14, to which the positive-side terminals of shunt windings 2b, 2c, and 2d are disconnected, since no conductors 11 are provided at locations of these holes of other connection board elements 1v, 1w, 1s, and 1Δ, or a part of widened areas of the conductors is disconnected so as not to disconnect conduction, drilling of these holes F21, F29, and F37 does not affect the conduction of other connection board elements 1v, 1w, 1s, and 1Δ.

Similarly, since holes F15, F24, and F32 for disconnecting the conductor 11 of the connection board element 1v for the V-phase do not serve to disconnect the conductors 11 on other connection board element 1u, 1w, 1s, and 1Δ, conduction of these connection boards are not changed. Also, since holes F18, F26, and F40, for disconnecting the conductor 11 on the connection board element 1w for the W-phase; holes F13, F19 F25, F30, F35, F39, F41, and F42 for disconnecting the conductor 11 on the connection board element 1s for Y-connection; and holes F1 through F12 for disconnecting the conductor 11 on the connection board element 1Δ for Δ-connection do not serve to disconnect conductors 11 of other connection board elements to disconnect conduction, conduction of these connection boards are not changed.

However, although holes F16 and F22 for disconnecting the conductor 11e on the connection board element 1s for Y-connection are at locations of circular conductors 11a of the connection board elements 1u, 1v, and 1w for U-, V-, and W-phases, since the conductors 11a of these connection board elements 1u, 1v, and 1w for U-, V-, and W-phases are widened at locations of these holes F16 and F22 as shown in Figs. 6A through 6C and Figs. 9A through 9C, the conductive state is maintained even if the holes F16 and F22 are drilled, and the wiring pattern for [serial connection - Y-connection] is not damaged. The hole F16 is not necessarily drilled.

When the phases of the connection board 1 that has holes drilled in that way are aligned as shown in FIG. 1, and the connecting portions 14 are fitted and connected to terminals 3 of each winding, the stator windings of the wiring pattern for serial connection and Y-connection can be obtained.

That is, shunt windings 2a through 2d are connected in series via the connection board elements 1u for the U-phase, passing from the terminal 12u to be connected to power source of the U-phase through the conductor 11a of the connection board elements 1u for the U-phase; passing from the connecting portion 14 connected to the positive terminal 3 (+U) of the shunt winding 2a of the U-phase through the shunt winding 2a of the U-phase; passing from the connecting portion 14 of the negative-side terminal 3 (-U) through the conductor 11b; and being connected to the connecting portion 14 of the positive terminal 3 (+U) of the shunt winding 2b, the shunt winding 2b, the connecting portion 14 of the negative-side terminal 3 (-U), the conductor 11c, the connecting portion 14 of the positive terminal 3 (+U) of the shunt winding 2c, the shunt winding 2c, the connecting portion 14 of the negative-side terminal 3 (-U), the conductor 11d, the connecting portion 14 of the positive terminal 3 (+U) of the shunt winding 2d, the shunt winding 2d, the connecting portion 14 of the negative-side terminal 3 (-U), and the circular conductor 11e of the connecting board element 1s for Y-connection.

The connecting portion 14, to which the negative-side terminal 3 (-U) of the last shunt winding 2d is connected, is connected to the circular conductor 11e of the connection board element 1s for Y-connection.

Similarly for the V-phase, the shunt windings 2a through 2d of the V-phase are connected in series by the connection board element 1v for the V-phase; the connecting portion 14, to which the positive-side terminal 3 (+V) of the first shunt winding 2a is connected, is connected to the terminal 12v to be connected to power source, and is connected to the circular conductor lie of the connection board element 1s for Y-connection via the connecting portion 14, to which the negative-side terminal 3 (-V) of the last shunt winding 2a is connected.

Further similarly, the connecting board element 1w for the W-phase connects shunt windings 2a through 2d for the W-phase in series. The connecting portion 14, to which the positive-side terminal 3 (+W) of the first shunt winding 2a is connected, is connected to the terminal 12w to be connected to power source; and is connected to the circular conductor 11e of the connection board element 1s for Y-connection via the connecting portion 14, to which the negative-side terminal 3 (-W) of the last shunt winding 2a is connected.

As a result, as shown in FIG. 4, the wiring pattern of stator windings, in which shunt winding of each phase if connected in series and in Y-connection, can be obtained.

### (2) Serial connection - Δ-connection

Holes F1 through F7, F9, F11 through F13, F15, F16, F18, F19, F21, F22, F24 through F26, F29, F30, F32, F33, F35, and F37 through F41 are drilled on a connection board 1.

In this case, the connection board elements 1u, 1v, and 1w for U-, V-, and W-phases, respectively, are in the states shown in Figs. 9A, 9B, and 9C, respectively. This is similar to the case of the above-described [serial connection - Y-connection]. What is different is that the states of connection board elements 1s and 1Δ for Y- and Δ-connections, respectively, are changed. In the connection board element 1s, only the connecting portion 14, to which the positive-side terminal 3 (+U) of the shunt winding 2a of the U-phase are connected, and the negative terminal 3 (-W) of the shunt winding 2d of the W-phase are connected by the circular conductor lie through holes F13, F16, F19, F22, F25, F30, F33, F35, F38, F39, and F41 as shown in Fig. 10C. While in the connection board element 1Δ for Δ-connections, since holes F1 through F7, F9, F11, and F12 are drilled, but holes F8 and F10 are not drilled, the connecting portion 14, to which the negative-side terminal 3 (-V) of the shunt winding 2d of the V-phase is connected, and the connecting portion 14, to which the positive-side terminal 3 (+W) of the shunt winding 2a of the W-phase are connected by the conductors 11f, and also, the connecting portion 14, to which the negative-side terminal 3 (-U) of the shunt winding 2d of the U-phase is connected, and the connecting portion 14, to which the positive-side terminal 3 (+V) of the shunt winding 2a of the V-phase are connected, are connected by the conductors 11f.

As a result, shunt windings 2a, 2b, 2c, and 2d of each phase are connected in series. The connecting portions 14 of the terminals -U and -V of the last shunt windings 2d of the U-phase and the V-phase are connected to the connecting portions 14 of the positive-side terminals 3 (+V, +W) of each shunt winding 2a of the V-phase and the W-phase by the conductor 11f of the connection board element 1Δ for Δ-connection, and also connected to the terminals 12v and 12w to be connected to power source of the V-phase and the W-phase. Also, the connecting portions 14 of the negative-side terminal 3 (-W) of the last shunt winding 2d of the W-phase is connected to the connecting portion 14 of the positive-side terminal 3 (+U) of the shunt winding 2a of the U-phase by the conductor 11e of the connection board element 1s for Y-connection, and also connected to the terminal 12u to be connected to power source of the U-phase. As described above, the wiring pattern for Δ-connection in which shunt winding of each phase is connected in series as shown in Fig. 5 can be obtained.

### (3) Dual parallel connection - Y-connection

This wiring pattern is a wiring pattern to connect the shunt winding 2a to the shunt winding 2b in series, the shunt winding 2c to the shunt winding 2d in series, and these two serially connected windings are connected in parallel to constitute Y-connection, as shown in Fig. 3B.

To obtain this wiring pattern, holes Fl through F13, F15, F17, F19, F21, F23, F25, F26, F28, F30, F32, F35, F37, F39, F40, and F42 are drilled.

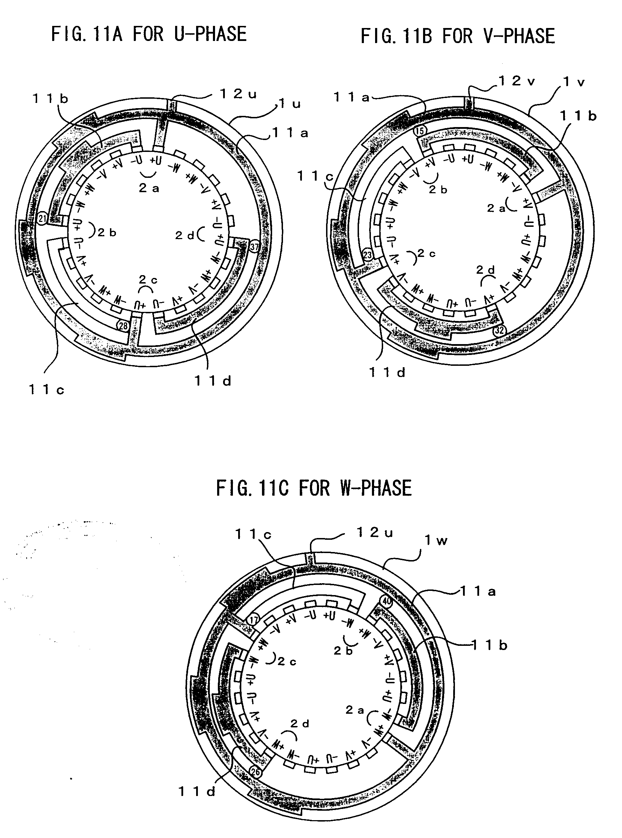

Figs. 11A through 11C show the wiring patterns of connection board elements 1u, 1v, and 1w for U-, V-, and W-phases, respectively for making this [dual parallel connection - Y-connection]. In this case also, only holes related to each connection board element are shown on each connection board element.

Fig. 11A shows the wiring pattern of the connection board element 1u for the U-phase. Only the connecting portions 14 of the positive-side terminals 3 (+U) of the shunt winding 2a and the shunt winding 2c are connected to the terminal 12u to be connected to power source via the circular conductor 11a by drilling holes F21 and F37. Also by drilling the hole F28, the arc-shaped conductor 11c that connects the connecting portion 14 of the negative-side terminal 3 (-U) of the shunt winding 2b with the connecting portion 14 of the positive-side terminal 3 (+U) of the shunt winding 2c is disconnected to break the connection between them. Consequently, the shunt winding 2b is connected in series from the arc-shaped conductor 11b to the shunt winding 2a connected to the terminal 12u to be connected to power source, and the end thereof terminates at the connecting portion 14 where the negative-side terminal 3 (-U) of the shunt winding 2b is connected. On the other hand, a shunt winding 2d is connected in series from the arc-shaped conductor 11d to the shunt winding 2c connected to the terminal 12u to be connected to power source, and the end thereof terminates at the connecting portion 14 where the negative-side terminal 3 (-U) of the shunt winding 2d is connected.

As a result, the shunt windings 2a and 2b, as well as the shunt windings 2c and 2d are connected in series, the connecting portions 14 of the positive-side terminals 3 (+U) of the shunt windings 2a and 2b each of which is one end of each serial connection are connected to the terminal 12u to be connected to power source, and the connecting portions 14 of the negative-side terminals 3 (-U) of the shunt windings 2b and 2d each of which is the other end of each serial connection are not connected to the conductor on the connection board element 1u for the U-phase, but connected to the conductor lie on the connecting board element 1s for Y-connection as described below.

Fig. 11B shows the wiring pattern of the connection board element 1v for the V-phase. Only the connecting portions 14 of the positive-side terminals 3 (+V) of the shunt winding 2a and the shunt winding 2c are connected to the terminal 12v to be connected to power source via the circular conductor 11a by drilling holes F15 and F32. Also by drilling the hole F23, the arc-shaped conductor 11c that connects the connecting portion 14 of the negative-side terminal 3 (-V) of the shunt winding 2b with the connecting portion 14 of the positive-side terminal 3 (+V) of the shunt winding 2c is disconnected to break the connection between them.

As a result, shunt winding 2a and 2b, and shunt windings 2c and 2d are connected in series, and the connecting portions 14 of the positive-side terminals 3 (+V) of the shunt windings 2a and 2c that are other ends of each serial connection are connected to the terminal 12v to be connected to power source, and the connecting portions 14 of the negative-side terminals 3 (-V) of the shunt windings 2b and 2d that are other ends of each serial connection are connected to the conductor lie on the connecting board element 1s for Y-connection as described below.

Fig. 11C shows the wiring pattern of the connection board element 1w for the W-phase. By drilling holes F17, F26, and F40, the shunt windings 2a and 2b, the shunt windings 2c and 2d for the W-phase are connected in series in the same manner as in the connection board elements 1u and 1w for U- and W-phases, respectively. The connecting portion 14 of the positive-side terminals 3 (+W) of the shunt winding 2a and the shunt winding 2c, which is one end of each serial connection, is connected to the terminal 12w to be connected to power source, and the connecting portion 14 of the negative-side terminals 3 (-W) of the shunt winding 2b and the shunt winding 2d, which is the other end of each serial connection, is connected to the conductor lie on the connecting board element 1s for Y-connection as described below.

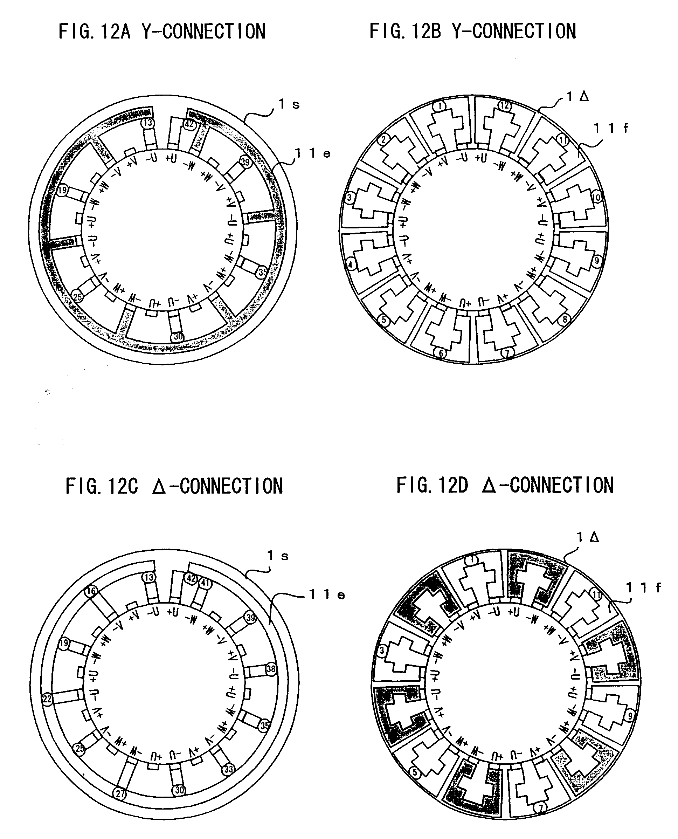

Figs. 12A and 12B show the connection patterns of the connection board element 1s for Y-connection and the connection board element 1Δ for Δ-connection in this [dual parallel connection Y-connection], respectively. Since all of holes F1 through F12 are drilled on the connection board element 1Δ for Δ-connection, as shown in Fig. 12B, connection between connecting portions 14 by conductors 11f is disconnected. Since holes F13, F19, F25, F30, F35, F39, and F42 are drilled on the connection board element 1s for Y-connection, the connecting portions 14, to which the negative-side terminals 3 (-U, -V, -W) of the shunt windings 2b and 2d of each phase are connected, are connected via the conductor 11e on the connection board element 1s for Y-connection.

As a result, a parallel circuit is formed in the winding of the U-phase, from a serial circuit from the terminal 12u to be connected to power source of the connection board element for the U-phase, through the shunt winding 2a, the arc-shaped conductor 11b, the shunt winding 2b, to the conductor 11f of the connection board element 1s for Y-connection; and a serial circuit from the terminal 12u to be connected to power source of the connection board element for the U-phase, through the shunt winding 2c, the arc-shaped conductor 11d, the shunt winding 2d, to the conductor 11f of the connection board element 1s for Y-connection.

Similarly, for the V-phase, a parallel circuit is formed from a serial circuit from the terminal 12v to be connected to power source of the connection board element 12v for the V-phase, through the shunt winding 2a, the arc-shaped conductor 11b, the shunt winding 2b, to the conductor 11f of the connection board element 1s for Y-connection; and a serial circuit from the terminal 12v to be connected to power source of the connection board element for the V-phase, through the shunt winding 2c, the arc-shaped conductor 11d, the shunt winding 2d, to the conductor 11f of the connection board element 1s for Y-connection.

For the W-phase, a parallel circuit is formed from a serial circuit from the terminal 12w to be connected to power source of the connection board element 1w for the W-phase, through the shunt winding 2a, the arc-shaped conductor 11b, the shunt winding 2b, to the conductor 11f of the connection board element 1s for Y-connection; and a serial circuit from the terminal 12w to be connected to power source of the connection board element for the W-phase, through the shunt winding 2c, the arc-shaped conductor 11d, the shunt winding 2d, to the conductor 11f of the connection board element 1s for Y-connection.

Thus, the wiring pattern of Y-connection in which two sets of two wirings are connected in series, and the serial circuits are connected in parallel can be obtained.

Since no conductors are provided on other connection board elements at the locations of holes F21 and F37 that disconnect the conductor of the connection board elements 1u for the U-phase, the locations of holes F15 and F32 that disconnect the conductor of the connection board elements 1v for the V-phase, and the locations of holes F26 and F40 that disconnect the conductor of the connection board elements 1w for the W-phase, drilling of these holes does not affect the conduction of other connection board elements.

Although the arc-shaped conductor 11d is provided on the connection board elements 1v for the V-phase, at the location of the hole F28 that disconnects the arc-shaped conductor 11c on the connection board elements 1u for the U-phase, the conductor 11d is widened at the location of the hole F28, and is not disconnected even if the hole F28 is drilled.

Although the arc-shaped conductor 11d is provided on the connection board elements 1w for the W-phase, at the location of the hole F23 that disconnects the arc-shaped conductor 11c on the connection board elements 1v for the V-phase, the conductor 11d is widened at the location of the hole F23, and is not disconnected even if the hole F23 is drilled. Although this hole F23 disconnects the arc-shaped conductor 11c on the connection board elements 1u for the U-phase, this arc-shaped conductor 11c is disconnected by the hole F28, and does not affect conduction.

Furthermore, although the arc-shaped conductor 11b is provided on the connection board elements 1u for the U-phase, at the location of the hole F17 that disconnects the arc-shaped conductor 11c on the connection board elements 1w for the W-phase, the conductor 11b is widened at the location of the hole F17, and is not disconnected even if the hole F17 is drilled. Although this hole F17 disconnects the arc-shaped conductor 11c on the connection board elements 1v for the V-phase, this arc-shaped conductor 11c is disconnected by the hole F23, and does not affect conduction.

### (4) Dual parallel connection - Δ-connection

Holes F1, F3, F5, F7, F9, F11, F13, F15 through F17, F19, F21 through F23, F25 through F28, F30, F32, F33, f35, and F 37 through F42 are drilled on the connection board 1.

In this case, the state of the connection board elements 1u, 1v, and 1w for U-, V-, and W-phases, respectively, is the state shown in Figs. 11A through 11C, and is similar to the case of the above-described [dual parallel connection - Y-connection]. What is different is that the state of the connection board elements 1s and 1Δ for Y- and Δ-connections, and as shown in Fig. 12C, the connection between all connecting portions 14 in the connection board elements 1s for Y-connection is disconnected by holes F13, F16, F19, F22, F25, F27, F30, F33, F35, F38, F39, F41, and F42. On the other hand, as shown in Fig. 12D, since holes F1, F3, F5, F7, F9, and F11 are drilled, but holes F2, F4, F6, F8, F10, and F12 are not drilled on the connection board elements 1Δ for Δ-connection, the connecting portion 14, to which the negative terminals 3 (-W) of the shunt windings 2b and 2d for the W-phase are connected, is connected to the connecting portion 14, to which the positive terminals 3 (+U) of the shunt windings 2a and 2c for the U-phase are connected, and since the connecting portion 14 of the positive terminals 3 (+U) of the shunt windings 2a and 2c for the U-phase are connected to the terminal 12u of the U-phase, the connecting portion 14 of the negative terminals 3 (-W) of the shunt windings 2b and 2d for the W-phase is connected to the terminal 12u for the U-phase.

Similarly, the connecting portion 14 of the negative terminals 3 (-V) of the shunt windings 2b and 2d for the U-phase is connected to the connecting portion 14, to which the positive terminals 3 (+V) of the shunt windings 2a and 2c for the V-phase are connected, and the connecting portion 14 of the negative terminals 3 (-V) of the shunt windings 2b and 2d for the V-phase are connected to the terminal 12w to be connected to power source of the W-phase, to which the connecting portion 14 of the positive terminals 3 (+W) of the shunt windings 2a and 2c for the W-phase is connected. Thus, the wiring pattern of the Δ-connection, in which the shunt winding of each phase shown in Fig. 5 is dual parallel connection shown in Fig. 3B, can be obtained.

In this case, although holes F16, F22, and F27 are drilled to disconnect the conductor lie on the connection board element 1s for Y-connection, the locations of drilling these holes are on the circular conductors 11a on connection board elements 1u, 1v, and 1w for U-, V-, and W-phases, respectively. However, since these circular conductors 11a are widened at the locations of holes F16, F22, and F27, conduction is not disconnected by these holes.

### (5) Quadruple parallel connection - Y-connection

As FIG. 3A shows the connection of shunt windings of each phase, this wiring pattern is used for connecting the shunt windings 2a through 2d in parallel to constitute Y-connection. In order to obtain this wiring pattern, holes F1 through F12, F14, F20, F26, F36, and F42 are drilled.

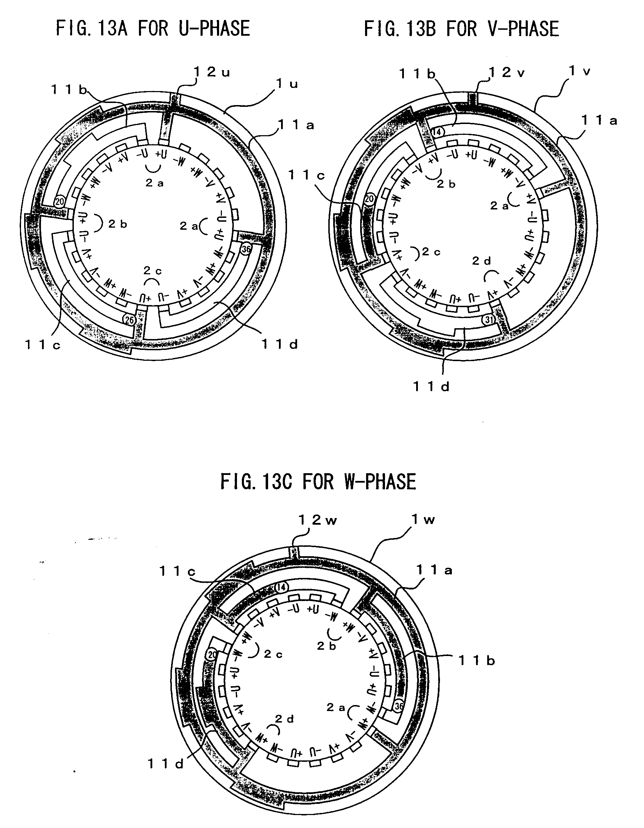

Figs. 13A through 13C show wiring patterns of connection board elements 1u, 1v, and 1w for U-, V-, and W-phases, respectively, for making this [quadruple parallel connection - Y-connection]. In this case also, only holes related to each connection board element are indicated on each connection board element.

Fig. 13A shows the wiring pattern of the connection board element 1u for the U-phase. By drilling holes F20, F26, and F36, the connection between shunt windings 2a, 2b, 2c, and 2d is disconnected, and the connecting portion 14 of the positive-side terminal 3 (+U) of each shunt winding 2a, 2b, 2c, and 2d are connected to the terminal 12u to be connected to power source via the circular conductor 11a.

Similarly for the connection board element 1v for the V-phase, by drilling holes F14, F20, and F31, as shown in Fig. 13B, the connection between shunt windings 2a, 2b, 2c, and 2d is disconnected, and the connecting portion 14 of the positive-side terminal 3 (+V) of each shunt winding 2a, 2b, 2c, and 2d are connected to the terminal 12v to be connected to power source via the circular conductor 11a.

For the connection board element 1w for the W-phase, by drilling holes F14, F20, and F36, as shown in Fig. 13C, the connection between shunt windings 2a, 2b, 2c, and 2d is disconnected, and the connecting portion 14 of the positive-side terminal 3 (+W) of each shunt winding 2a, 2b, 2c, and 2d are connected to the terminal 12w to be connected to power source via the circular conductor 11a. That is, the positive-side terminals 3 of shunt windings for U-, V-, and W-phases are connected in parallel to the terminals 12u, 12v, and 12w to be connected to power source, respectively.

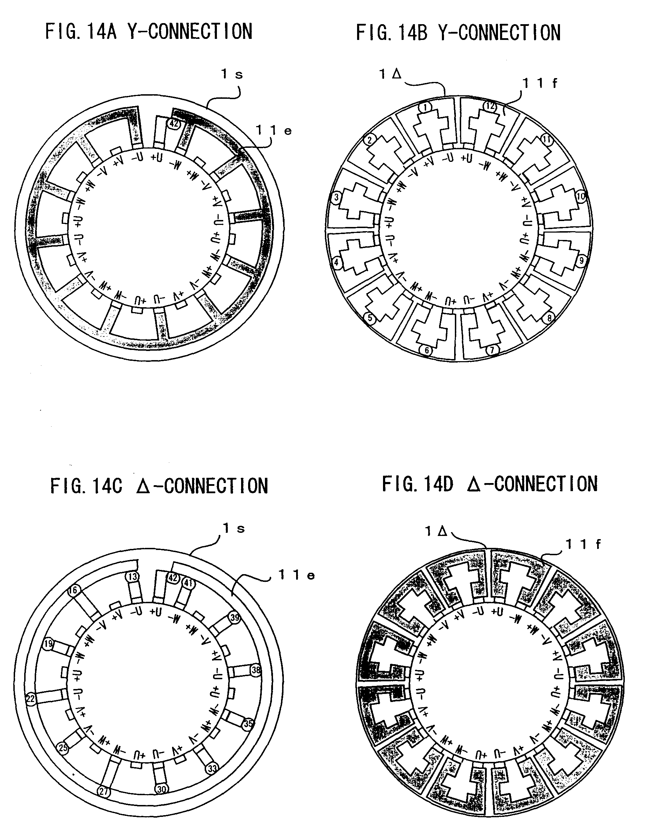

Figs. 14A and 14B show the connection patterns of the connection board element Is for Y-connection and the connection board element 1Δ for Δ-connection, for making this [quadruple parallel connection - Y-connection], respectively. Since the hole F42 is drilled on the connection board element 1s for Y-connection as shown in Fig. 14A, the connecting portion 14 connected to the negative-side terminal 3 of each shunt winding for each phase is connected by the conductor 11e. (Holes F14, F20, F26, F31, and F36 do not disconnect the conductor of the connection board element 1s for Y-connection.) Also, holes F1 through F12 are drilled on the connection board element 1Δ for Δ-connection as shown in Fig. 14B, connecting portions 14 are not connected.

Since holes are drilled as described above, shunt windings for each phase are connected in parallel as shown in Fig. 3C, and these windings connected in parallel are connected in Y-connection.

### (5) Quadruple parallel connection - Δ-connection

In this case, holes F13, F14, F16, F19, F20, F22, F25, F26, F27, F30, F31, F33, F35, F36, F38, F39, F41, and F42 are drilled on the connection board 1.

The connected state of connection board elements 1u, 1v, and 1w for U-, V-, and W-phases, respectively, is the same as that of the above-described [quadruple parallel connection - Y-connection] shown in Figs. 13A through 13C, and only the connection of the connection board element Is for Y-connection and the connection board element 1Δ for Δ-connection are changed as shown in Figs. 14C and 14D. By drilling holes F13, F16, F19, F22, F25, F27, F30, F33, F35, F38, F39, F41, and F42, the connection board element 1s for Y-connection does not connect the connecting portion 14, to which the terminals of each shunt winding for each phase are connected.

On the other hand, since holes F1 through F12 are not drilled on the connection board element 1Δ for Δ-connection, the connecting portion 14 to which the negative-side terminal 3 (-W) of each shunt winding for the W-phase is connected is connected to the connecting portion 14 to which the positive-side terminal 3 (+U) of each winding for the U-phase is connected.

Similarly the connecting portion 14 to which the negative-side terminal 3 (-V) of each shunt winding for the V-phase is connected is connected to the connecting portion 14 to which the positive-side terminal 3 (+W) of each winding for the W-phase is connected; and the connecting portion 14 to which the negative-side terminal 3 (-U) of each shunt winding for the U-phase is connected is connected to the connecting portion 14 to which the positive-side terminal 3 (+V) of each winding for the V-phase is connected.

Also, as shown in Figs. 13A through 13C, since the positive-side terminals 3 (+U, +V, +W) of each shunt winding for each of U-, V-, and W-phases is connected to terminals 12u, 12v, and 12w to be connected to power source, respectively, the connecting portion 14 to which the negative-side terminal 3 (-W) of each shunt winding for the W-phase is connected is connected to the terminal 12u to be connected to power source of the U-phase; the connecting portion 14 to which the negative-side terminal 3 (-V) of each shunt winding for the V-phase is connected is connected to the terminal 12w to be connected to power source of the W-phase; and the connecting portion 14 to which the negative-side terminal 3 (-U) of each shunt winding for the U-phase is connected is connected to the terminal 12v to be connected to power source of the V-phase.

As a result, the wiring pattern, in which shunt windings of each phase are connected in parallel and in Δ-connection, can be obtained.

Wiring patterns for six types of stator windings can be obtained in the above-described embodiment, by selectively drilling holes on the connection board 1, which is formed by stacking five connection board elements 1u, 1v, 1w, 1s, and 1Δ, aligned according to phases and insulated from each other with insulating materials. Therefore, even when various types of electric motors are manufactured, a stock of only one type of connection board 1 suffices, and a desired wiring pattern can be obtained by forming desired holes manually or with a punch press so as to meet the type and properties of the electric motor to be manufactured.

In the above-described embodiment, since one hole may pass through the conductor portions of different connection board elements, a desired wiring pattern is obtained by forming connected conductor patterns for each connection board element as shown in Figs. 6A through 7B, and by drilling holes in the connection board elements. However, as an alternative, the basic pattern of stator windings may be obtained by increasing the number of connection board elements and then causing a hole to pass through only the conductor portion of any one of the connection board elements so that wiring patterns are formed on the connection board elements by filling the holes which have been formed. In this case, the holes at desired locations are filled with short-circuiting members such as pins according to the desired wiring pattern to complete the wiring pattern.

Furthermore, in this case, the properties of a motor can be changed by removing the short-circuiting members such as pins that have been inserted and filling other holes with the short-circuiting members to form another wiring pattern.

Since a desired wiring pattern for the connection board to connect the stator windings of an electric motor is obtained by removing or adding a part of the connection pattern on the connection board, stator windings of a plurality of specifications can be produced by removing or adding a part of the connection pattern which has been formed in one type of a connection board that has been stocked, with the result that production efficiency is improved and change in the wiring patterns of stator windings is also easy. Also, the stock of one type of connection board facilitates inventory control.

## Claims

1. A stator structure of an electric motor that uses a connection board for wiring of stator windings, comprising:
a connection board having a connection pattern that can acquire various wiring patterns by connecting terminals of windings constituting said stator windings to each other,
wherein a part of the connection pattern on said connection board is disconnected or added so as to form a wiring pattern of said stator windings and to connect the windings to each other.

2. The stator structure of an electric motor according to claim 1, wherein said connection board is formed of a stacked plurality of connection board elements, and a connection pattern for obtaining the wiring pattern of the stator windings has been formed by making holes in said connection board to disconnect a conductor of a connection pattern provided on each connection board element.

3. The stator structure of an electric motor according to claim 1, wherein said connection board is formed of a stacked plurality of connection board elements, and a connection pattern for obtaining the wiring pattern of the stator windings has been formed by making holes in said connection board to disconnect a conductor of a connection pattern provided on each connection board element, and further by filling some of said made holes at desired locations with a short-circuiting material to allow said locations to short-circuit.

4. A connection board creating stator wiring patterns together with stator windings of each phase of an electric motor, wherein
said connection board is constituted by a stacked plurality of connection board elements,
each of said connection board elements is provided with a conductor that provides various stator winding patterns when combined with stator windings, and
a desired stator winding pattern has been formed in said connection board elements by making holes at selected locations of said connection board, to disconnect a corresponding location of a conductor of each of said connection board elements.

5. A connection board creating stator wiring patterns together with stator windings of each phase of an electric motor according to claim 4, wherein some of said holes have been filled with a short-circuiting material to allow said locations to conduct electricity, so as to form a desired stator winding pattern in said connection board elements.

6. The connection board according to claim 4 or 5, wherein
said electric motor is a three-phase motor, and
said connection board elements that constitute said connection board are, a connection board element for a first phase, a connection board element for a second phase, a connection board element for a third phase, and a connection board element for Y-connection, and a connection board element for Δ-connection.

7. The connection board according to claim 6, wherein the conductor of each of said connection board element for the first phase, said connection board element for the second phase, and said connection board element for the third phase comprises a circular portion where the conductor is connected to an external power source, and three arc-shaped portions positioned on a same circumference inside said circular portion.

8. The connection board according to claim 7, wherein a part of said circular portion of said conductor and/or a part of any one of said arc-shaped portions have enough width not to affect the conduction of electricity even if holes have been made at corresponding locations of said connection board.

9. The connection board of any one of the preceding claims, wherein said holes have been made by drilling.
